# EUROPEAN PATENT SPECIFICATION

(11) **EP 3 064 257 B1**
(45) Date of publication and mention of the grant of the patent: **10.07.2019**
(21) Application number: 16158761.3
(22) Date of filing: 04.03.2016
(51) Int. Cl.: A63F 13/85, A63F 13/52, A63F 13/25, B29C 67/00

(54) **SYSTEM, DEVICE AND METHOD OF 3D PRINTING**
SYSTEM, VORRICHTUNG UND VERFAHREN ZUM 3D-DRUCKEN
SYSTÈME, DISPOSITIF ET PROCÉDÉ D'IMPRESSION 3D

(30) Priority: 06.03.2015 GB 201503834
(43) Date of publication of application: 07.09.2016
(73) Proprietor: Sony Interactive Entertainment Inc., Tokyo 108-8270 (JP)
(72) Inventor: BIGOS, Andrew James, London, W1F 7LP (GB); SUZUOKI, Masakazu, Tokyo, 108-0075 (JP); HAYASHI, Masakazu, Tokyo, 108-0075 (JP); NAGAI, Norihiro, Tokyo, 108-0075 (JP)
(74) Representative: D Young & Co LLP

(56) References cited:
- GB-A- 2 499 694
- US-A1- 2005 182 693
- Roxy: "7 Essential Tricks to Prepare Your 3D Model for 3D Printing", , 21 August 2014 (2014-08-21), XP055286238, Retrieved from the Internet: URL:https://i.materialise.com/blog/the-pri ntable-3d-design-checklist-common-design-f laws-and-how-to-fix-them/ [retrieved on 2016-07-06]

## Description

The present invention relates to a system, device and method of 3D printing.

3D printing is a means of volumetric printing, where instead of depositing two-dimensional pixels on a flat surface, the printer deposits three-dimensional voxels within a volume. There are numerous technologies to achieve this, including the use of lasers to melt and fuse materials such as metal powder in incremental layers to build a structure, or the use of a high-temperature print-head to deposit small droplets of plastic that cool and harden to build up a 3D model.

The design for such a 3D model is typically generated in a computer-aided design program, in which a user defines surfaces and volumes of a virtual model. A drawing list is then generated by the program specifying the order in which to fuse or deposit materials to render the virtual model using the 3D printer.

This approach has resulted in the creation of many aesthetically and functionally unique objects, some of which are difficult to make using conventional processes. However the utility of 3D printers has still not been fully explored.

Other previously proposed arrangements are disclosed in US 2005/182693, and Roxy, '7 Essential Tricks to Prepare Your 3D Model for 3D Printing'; Online at *i.materialise.com.*

The present invention aims to provide a new use for 3D printers.

In a first aspect, a method of 3D printing is provided according to claim 1.

In another aspect, an entertainment device is provided according to claim 10.

In another aspect, a 3D printing system is provided according to claim 12.

Further respective aspects and features of the invention are defined in the appended claims.

Embodiments of the present invention will now be described by way of example with reference to the accompanying drawings, in which:
Figure 1 is a schematic diagram of an entertainment device in accordance with embodiments of the present invention.
Figure 2A is schematic diagram of a side elevation of a 3D printer in accordance with embodiments of the present invention.
Figure 2B is schematic diagram of a plan view of a 3D printer in accordance with embodiments of the present invention.
Figure 3 is a schematic diagram of a videogame virtual environment in accordance with embodiments of the present invention.
Figure 4 is a schematic diagram of a 3D printable videogame character in accordance with embodiments of the present invention.
Figures 5A-E are schematic diagrams illustrating a process of generating geometry for 3D printing in accordance with embodiments of the present invention.
Figure 6 is a schematic diagram of a 3D printable videogame character in accordance with embodiments of the present invention.
Figure 7 is a flowchart of a method of 3D printing in accordance with embodiments of the present invention.

A system, device and method of 3D printing are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an embodiment of the present invention, an entertainment device is operably coupled to a 3D printer. The entertainment device is arranged in operation to capture snapshots of videogame play for replication by the 3D printer, as explained later herein.

### Entertainment device

An example of a suitable entertainment device is the Sony® PlayStation 4® device.

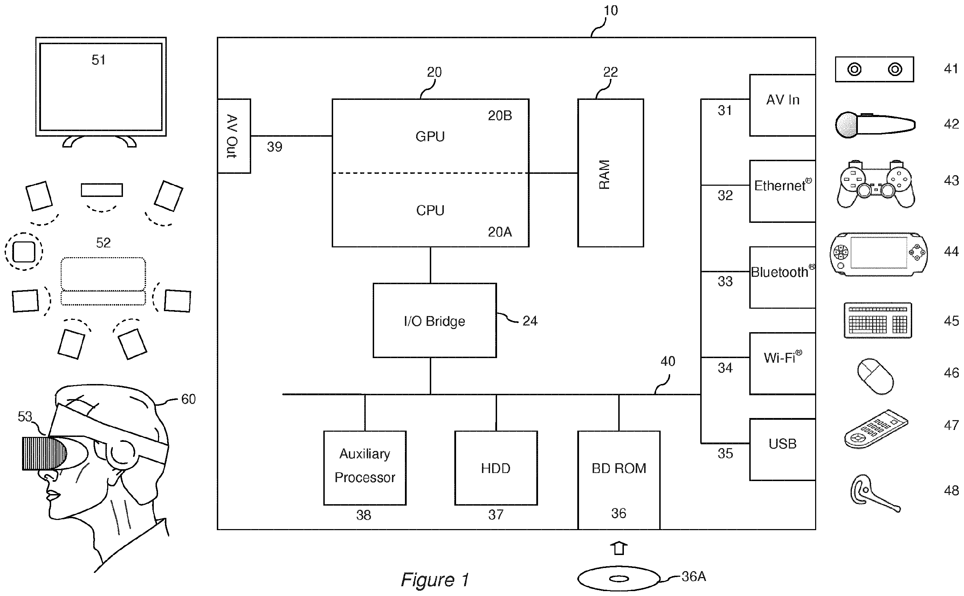

Figure 1 schematically illustrates the overall system architecture of the Sony® PlayStation 4® entertainment device. A system unit 10 is provided, with various peripheral devices connectable to the system unit.

The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ® drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ® port 32, a Bluetooth ® wireless link 33, a Wi-Fi ® wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ® or PS Camera ®; wand-style videogame controllers 42 such as the PlayStation Move ® and conventional handheld videogame controllers 43 such as the DualShock 4 ®; portable entertainment devices 44 such as the PlayStation Portable ® and PlayStation Vita ®; a keyboard 45 and/or a mouse 46; a media controller 47, for example in the form of a remote control; and a headset 48. Other peripheral devices may similarly be considered such as a phone or tablet, printer, or a 3D printer (not shown).

The GPU 20B, optionally in conjunction with the CPU 20A, generates video images and audio for output via the AV output 39. Optionally the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In more detail, regarding processing, the CPU 20A may comprise two 64-bit quad core modules, based for example on the 'Jaguar' CPU architecture by AMD ®, for a total of eight cores. Each core may use a base clock speed of 1.6 GHz. The GPU 20B may comprise 18 compute units each comprising 64 cores, for a total of 1152 cores. The GPU may be based for example on the Radeon ® GCN architecture by AMD ®. The GPU cores may be used for graphics, physics calculations, and/or general-purpose processing.

Regarding storage, the system RAM 22 may comprise 8GB RAM, for example in 16 blocks of 512MB GDDR5 unified system memory, and is shared by the CPU and GPU. Meanwhile the hard disk may be a 500 GB hard drive. Optionally the hard drive is mounted so as to be replaceable by a user of the system unit. The Blu-ray ® drive may read data from Blu-ray discs at multiples of the standard reading speed. The Blu-ray drive may be operably coupled to a hardware-implemented so-called 'zlib' decompression module. The auxiliary processor may be provided with its own local memory, such as for example 256 MB of DDR3 SDRAM.

Regarding communication, the system unit 10 may comprise 802.11 b/g/n Wi-Fi® 34; 10Base-T, 100BASE-TX and 1000BASE-T Ethernet ® 32; Bluetooth 2.1 ® 33 and one or more USB 3.0 ports 35. The system unit may receive video and optionally audio via AV input 31. Similarly the system unit may output video and optionally audio via AV output 39 or via Bluetooth ®, Wi-Fi ® or USB.

Regarding peripherals, the system unit is typically provided with at least one hand-held controller 43 such as the DualShock 4 ®. This controller may be used to interact with user interfaces presented by the system unit that are associated with the operating system and/or a particular game or application being run by the system unit.

The user may also interact with the system unit using a video camera 41 such as the PlayStation Eye ® camera. This may provide monoscopic or stereoscopic video images to the system unit 10 via for example AV input 31. Where these images capture some or all of the user, the user may enact gestures, facial expressions or speech as appropriate to interact with the currently presented user interface.

Alternatively or in addition, a controller designed to assist with camera-based user interaction, such as the PlayStation Move ® 42, may be provided. This controller has a wand form factor and an illuminated region that facilitates detection of the controller within a captured video image. Illuminated regions may similarly be provided on other controllers 43, such as on the DualShock 4 ®. Both kinds of controller comprise motion sensors to detect transverse movement along three axes and rotational movement around three axes, and wireless communication means (such as Bluetooth®) to convey movement data to the system unit. Optionally such controls can also receive control data from the system unit to enact functions such as a rumble effect, or to change the colour or brightness of the illuminated region, where these are supported by the controller.

The system unit may also communicate with a portable entertainment device 44. The portable entertainment device 44 will comprise its own set of control inputs and audio/visual outputs. Consequently, in a 'remote play' mode some or all of the portable entertainment device's inputs may be relayed as inputs to the system unit 10, whilst video and/or audio outputs from the system unit 10 may be relayed to the portable entertainment device for use with its own audio/visual outputs. Communication may be wireless (e.g. via Bluetooth ® or Wi-Fi®) or via a USB cable.

Other peripherals that may interact with the system unit 10, via either wired or wireless means, include a keyboard 45, a mouse 46, a media controller 47, and a headset 48. The headset may comprise one or two speakers, and optionally a microphone.

Regarding output, the GPU typically generates a 1080p high definition image to the AV output 39. The frame rate of these images may vary. The image is typically conveyed to a television 51 via a standard HDMI connection, optionally via an AV receiver (not shown). Where the television supports stereoscopic display, and optionally in response to a command from the user, the 1080p high definition may be formatted as a stereoscopic image for example using a left-right side-by-side format. The television will then split the image in two and interpolate each half to full width for respective presentation to the user's left and right eyes, either by use of specially adapted glasses or by use of directed light paths from an autostereoscopic display.

Optionally in conjunction with an auxiliary audio processor (not shown), the APU 20 generates audio for output via the AV output 39. The audio signal is typically in a stereo format or one of several surround sound formats. Again this is typically conveyed to the television 51 via an HDMI standard connection. Alternatively or in addition, it may be conveyed to an AV receiver (not shown), which decodes the audio signal format and presented to a home cinema system 52. Audio may also be provided via wireless link to the headset 48 or to the hand-held controller 43. The hand held controller may then provide an audio jack to enable headphones or a headset to be connected to it.

Finally, the video and optionally audio may be conveyed to a head mounted display 53 such as the Sony Morpheus ® display. The head mounted display typically comprises two small display units respectively mounted in front of the user's eyes, optionally in conjunction with suitable optics to enable the user to focus on the display units. Alternatively one or more display sources may be mounted to the side of the user's head and operably coupled to a light guide to respectively present the or each displayed image to the user's eyes. Alternatively, one or more display sources may be mounted above the user's eyes and presented to the user via mirrors or half mirrors. In this latter case the display source may be a mobile phone or portable entertainment device 44, optionally displaying a split screen output with left and right portions of the screen displaying respective imagery for the left and right eyes of the user. Their head mounted display may comprise integrated headphones, or provide connectivity to headphones. Similarly the mounted display may comprise an integrated microphone or provide connectivity to a microphone.

In operation, the entertainment device defaults to an operating system such as Orbis OS®, a variant of FreeBSD 9.0. The operating system may run on the CPU 20A, the auxiliary processor 38, or a mixture of the two. The operating system provides the user with a graphical user interface such as the PlayStation Dynamic Menu. The menu allows the user to access operating system features and to select games and optionally other content.

Upon start-up, respective users are asked to select their respective accounts using their respective controllers, so that optionally in-game achievements can be subsequently accredited to the correct users. New users can set up a new account. Users with an account primarily associated with a different entertainment device can use that account in a guest mode on the current entertainment device.

Once at least a first user account has been selected, the OS may provide a welcome screen displaying information about new games or other media, and recently posted activities by friends associated with the first user account.

The OS then provides a series of icons for the user to select amongst, for example in the form of two parallel horizontal rows. In this example the content of the top row may be fixed and relate to operating system features, whilst the bottom row may be at least in part dynamically assembled to relate to recent activities, such as providing launch icons for the most recently played or downloaded games.

The top row of icons may provide access to screens relating to an online store; notifications; friends; text chat; voice chat; user account profile; trophies; system settings; and/or power management.

When selected, the online store may provide access to games and media for download to the entertainment device. A welcome screen may highlight featured content. Where an online subscription service is provided (Such as so-called 'PS Plus'), then content or prices exclusive to that service may be provided in addition to standard content or prices. The store may also provide means to pay money into an online account for purchasing content, and may provide a record of purchases, enabling a user to download a purchased item of content at a later date or multiple times (for example after choosing to swap to a larger hard disk).

The notifications screen provides information about new trophies; game alerts (for example relating to special online events); game invites from friends; download and/or update status for content, and upload status for content being shared.

The friends screen allows a user to view all their friends or filter them according to who is currently online; additionally a user can review a list of other users they have met within games or other multi-user applications of the entertainment device, and optionally send such a user a friend request or conversely block a user to avoid encountering them again. In addition, optionally a user can request that a friend allow them to see their real name; subsequently they can also contact this friend via other social media such as Facebook®, optionally via a built-in interface.

Text chat provides a means to send messages to friends and other users of the entertainment device's network. Meanwhile voice chat provides a means to invite a group of friends to share an audio channel over the entertainment device's network so that they can chat to each other, for example whilst playing a game.

The account user profile screen allows a user to review statistics relating to their activities with the entertainment device. The screen also provides means to configure the user's appearance on the network, such as selecting an avatar to be associated with their username.

The trophy screen allows a user to view their trophies and in-game progress; trophies may be organised on a game-by-game basis. A user's trophies or other performance statistics may be compared with those of their friends to identify the friend with the closest better performance statistic in a game, so as to encourage the user to play further or improve their play of the game.

The system settings screen provides access to further menus enabling the user to configure aspects of the operating system. These include setting up an entertainment device network account, and network settings for wired or wireless communication with the Internet; the ability to select which notification types the user will receive elsewhere within the user interface; login preferences such as nominating a primary account to automatically log into on start-up, or the use of face recognition to select a user account where the video camera 41 is connected to the entertainment device; parental controls, for example to set a maximum playing time and/or an age rating for particular user accounts; save data management to determine where data such as saved games is stored, so that gameplay can be kept local to the device or stored either in cloud storage or on a USB to enable game progress to be transferred between entertainment devices; system storage management to enable the user to determine how their hard disk is being used by games and hence decide whether or not a game should be deleted; software update management to select whether or not updates should be automatic; audio and video settings to provide manual input regarding screen resolution or audio format where these cannot be automatically detected; connection settings for any companion applications run on other devices such as mobile phones; and connection settings for any portable entertainment device 44, for example to pair such a device with the entertainment device so that it can be treated as an input controller and an output display for so-called 'remote play' functionality.

The entertainment device network account may be set up to include the user's real name and optionally other personal details, bank details for online payments, an indication of whether the current entertainment device is the primary entertainment device associated with the user account, and the ability to selectively transfer licenses between entertainment devices where the user account is associated. Additionally a user may provide user account information for other services for which access may be integrated into the operating system, such as Facebook® and Twitter®; this enables easy sharing of the user's activities with friends who may not be on the entertainment device network but are on other social networks.

The power management icon allows the user to turn the device off. Optionally it may provide a timer for the entertainment device to turn off within a after a predetermined time unless the user intervenes.

The bottom row of the menu may show icons for recently played games, enabling quick access. Optionally selection of a game icon provides a summary of game progress and any relevant statistics, and where appropriate information such as progress and commentary from friends who have also played or are playing the game. Other information regarding the game may also be provided such as details of recently applied updates, or links to downloadable content associated with the game that is available in the online store.

The bottom row may also provide access to other media sources such as a web browser, television and music media applications, and any live streaming service provided by the entertainment device network. Additionally an icon may be provided to access the full library of content on the device, such as games that have not been recently played.

The user interface of the operating system may also receive inputs from specific controls provided on peripherals, such as the hand-held controller 43. In particular, a button to switch between a currently played game and the operating system interface may be provided. Additionally a button may be provided to enable sharing of the player's activities with others; this may include taking a screenshot or recording video of the current display, optionally together with audio from a user's headset. Such recordings may be uploaded to social media hubs such as the entertainment device network, Twitch®, Facebook® and Twitter®.

### 3D Printer

As was noted previously, the entertainment device is operably coupled to a 3D printer.

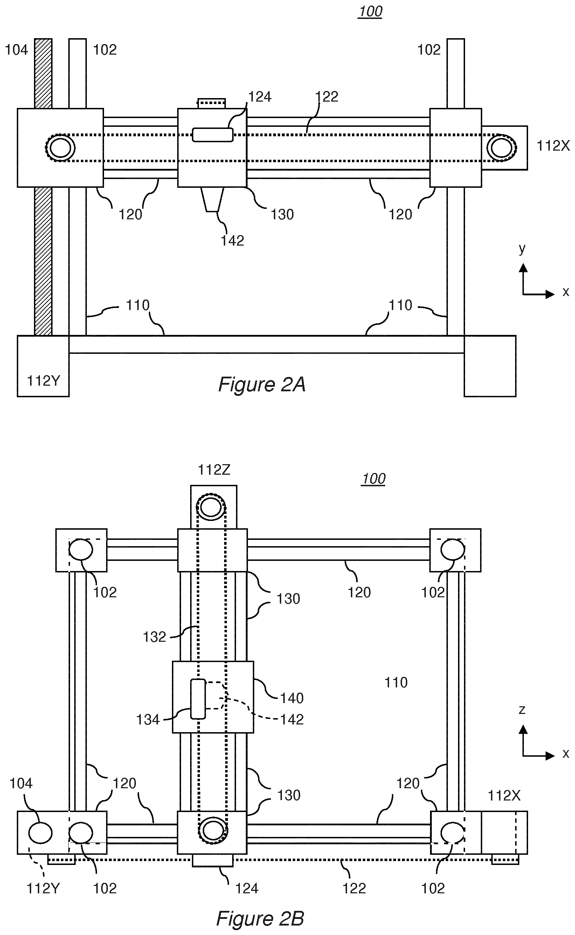

It will be appreciated that there are numerous technologies for 3D printing that are typically differentiated by how layers are built up to create a model. One technology is known as selective laser sintering (SLS), where a layer of powder is selectively fused together by a laser to create solid regions; a new layer of powder is then placed on top and the process repeats to build the model. Another technology is known as stereo lithography, and uses a photo-reactive liquid in conjunction with one or more lasers to harden the liquid at defined points, thereby building the model, again typically in layers. Whilst both of these techniques are envisaged within the scope of embodiments of the present invention, they have the disadvantage of requiring both powerful lasers and large volumes of matrix material in the form of powder or liquid around the model, which make them less practical for domestic use. Consequently a preferred technology is fused deposition modelling (FDM). This approach melts plastic in a printer head that moves over successive layers of the model, depositing droplets of plastic at selective positions in each layer in a manner similar to the deposition of droplets of ink by an inkjet printer on a sheet of paper. This avoids the need for lasers or a surrounding matrix of the raw material used by the model. Accordingly for the purposes of understanding an FDM 3D printer is briefly described herein with reference to Figures 2A and 2B.

Figure 2A shows a side elevation of a simple FDM 3D printer 100, whilst Figure 2B shows a plan view of the same FDM 3D printer. The printer 100 comprises a base structure 110 that provides a working surface for assembly of the printed model and support struts 102 upon which a printer frame 120 can be raised and lowered.

In an example mechanism, a motor 112Y is coupled to a drive bar 104 comprising a screw thread; a printer frame 120 then comprises a coupling section with a threaded hole and a smooth hole, the threaded hole being engaged with the drive bar and the smooth hole being engaged with one of the support struts. When, under instruction from a printer driver, the motor 112Y turns the drive bar in a clockwise or anticlockwise direction, the printer frame is moved up or down the drive bar and support strut (i.e. along the y-axis) and hence raises or lowers a printer carriage 130 attached to it.

As can be seen from Figure 2B, the printer frame 120 is typically mounted on four support struts 102. Optionally a second motor, drive bar and coupling section may be provided at an opposing corner of the frame, to reduce strain on the frame and the motor.

The printer frame 120 supports the printer carriage 130. A motor 112X is coupled to a drive band 122 that is fixed by fixing means 124 to the printer carriage 130. When, under instruction from a printer driver, the motor 112X rotates the drive band clockwise or anticlockwise, the printer carriage 130 is moved right or left along the printer frame 120 (i.e. along the x-axis) and hence moves an attached printer mechanism 140 laterally.

The printer carriage 130 supports the printer mechanism 140. A motor 112Z is coupled to a drive band 132 that is fixed by fixing means 134 to the printer mechanism 140. When, under instruction from a printer driver, the motor 112Z rotates the drive band clockwise or anticlockwise, the printer mechanism 140 is moved in or out of a depth direction (i.e. along the z-axis).

The printer mechanism 140 itself comprises heating means for heating the end of one or more plastic threads fed into the mechanism (not shown), or for heating grains of plastic powder obtained from a hopper on the mechanism (not shown). The heating of the plastic or alternatively the release of heated plastic is controlled by instruction from a printer driver. A resulting bead or droplet of melted plastic is then deposited onto the working surface 110 of the printer or a partially built model (not shown) as applicable, through the printer head or nozzle 142.

In this way, under suitable instruction from a printer driver, the printer head can be positioned anywhere within a working volume of the 3D printer using motors 112X, Y, Z, and a droplet of plastic can be deposited at that position, which then cools and hardens to form a voxel of a 3D model. Through successive movement of the printer head and selective melting or release of plastic droplets, a completed 3D model can thus be built from a plurality of such voxels.

Typically the printer driver itself is a software module in a computer-aided design system that receives model geometry describing the 3D model. The printer driver then generates thin slices of the 3D model one voxel thick for each layer in the y direction, and determines the x, z coordinates for each voxel in that layer. The printer driver then outputs a sequence of instructions to the printer 100 to move the printer head 142 to the respective x, z coordinate for each voxel in layer y, where the printer mechanism is instructed to heat and/or release a droplet of plastic to form a voxel at that position. In this way the digital 3D model is rebuilt as a physical model by the 3D printer.

In an embodiment of the present invention, the printer driver is incorporated into the videogame, or the operating system of the entertainment device, or a middleware library of support functions used by either the videogame or the operating system.

### Virtual Environment

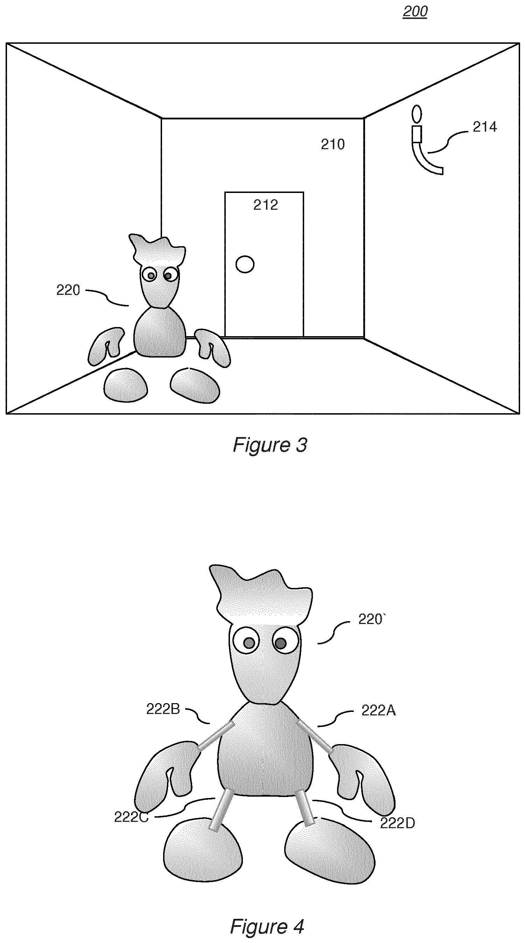

Referring now to Figure 3, a videogame running on the entertainment device comprises a virtual environment in which typically a plurality of entities or environmental elements are dynamically viewed as the user changes the position of viewpoint and as entities or elements of the game enact scripted activities or react to the user's behaviour, or a mixture of both.

In Figure 3, a simple environment 200 is illustrated comprising a room 210 with a door 212; on one wall there is mounted a candle in a candleholder 214. In the room is the player's character 220 (here illustrated for example by the fictitious game character 'Blobman').

The virtual environment is constructed in 3D from geometry data, typically in the form of polygons defining a surface of an object. These polygons may be predefined for example in the case of static objects and background scenery, and/or may be warped/repositioned or procedurally generated in the case of mobile entities within the environment such as the player's character. It will be appreciated that references herein to 'polygons' encompasses preliminary geometrical features such as vertices, from which polygons are built, where these are used in the graphics pipeline. Similarly, voxel rendering uses equivalent geometric features to describe objects. Hence processes described as applying to polygons may be applied in whole or part to such other geometrical features as appropriate.

The virtual environment is then prepared for presentation to the user from a selected viewpoint. Elements of the environment that have line of sight to the user's viewpoint are patterned with texture information appropriate to the object they represent, and the textured geometry is further processed for lighting effects, such as variations in brightness from virtual light sources, and bump mapping (or similar techniques such as displacement mapping or use of an isosurface) to simulate how the texture should interact with such a virtual light source. Additionally other effects such as volumetric fog and particle effects may be included.

The final rendered image is then presented to the user, typically via a 2D or 3D television or via a head mounted display.

Often within such games, the user has an experience that they wish to share with friends and/or the wider world. To this end, as noted previously an entertainment device such as the PlayStation 4 ® can have a 'share' button on its controller to facilitate a capture of the image presented to the user, which can then be uploaded to a sharing site such as a social media site.

### Printing a 3D model of the environment

In an embodiment of the present invention, the user is provided with the option to select a moment within the game from which to create a 3D printed model. In this way, the user can create tangible mementos of their in-game experiences.

It will be appreciated that in-game geometry may be suitable to drive a 3D printing process. For example, the simple block-based environment within Minecraft lends itself to being rendered by a 3D printer.

However, this is the exception rather than the rule. A particular appeal of video games is their ability to present environments and characters that are not bound by the normal rules of physics. In particular, objects may exist in a predetermined relationship to each other without having physical connections (as exemplified by the character 'Blobman' in Figure 3, whose hands and feet are not physically attached to his torso in this figure), whilst other objects may be defined only in two dimensions within the three-dimensional environment, such as curtains, capes and in many cases environmental components such as walls. This is because physical strength is not a requirement of the environment, where program rules prevent movement beyond certain boundaries, and the walls are simply decorative surfaces for textures demarcating those boundaries.

Hence a virtual environment may comprise several bounding surfaces that have zero thickness, upon which are placed physical objects, some of which may additionally be unstable in the real world. An example of such bounding surfaces may be the walls of the room 210 in the virtual environment 200 of Figure 3.

It is not feasible to print such a virtual environment using a 3D printer.

### Supplementary Geometry

Accordingly, in an embodiment of the present invention, supplementary printer geometry is provided that is used to modify elements of the environment that are unsuited to 3D printing.

Referring now to Figure 4, in one embodiment, the supplementary printer geometry is defined by the game developer in a similar manner to conventional game geometry. For example, supplementary printer geometry for the character 'Blobman' may comprise rods 222A,B,C,D to connect the legs and arms to the character's torso, making the modified 3D character 220' a contiguous body suitable for 3D printing.

The supplementary printer geometry may replicate some or all of the existing in-game geometry in addition to the elements that support 3D printing, or may only comprise the elements that support 3D printing, with the combined supplementary and in-game geometry being used for 3D printing. Alternatively or in addition in some cases a partial replacement of in-game geometry may be used, for example to replace a sharp point on a sword or a stiletto heel with a rounded or broad surface, either for safety reasons or to provide a better bond for the object to its supporting surface when it is 3D printed.

Hence more generally the in-game geometry is supplemented by, and optionally at least partially replaced by, supplementary printer geometry for 3D printing that takes account of the physical requirements of the printing process and of the completed model under the effect of gravity.

Consequently when a user pauses the game and selects a 3D snapshot for printing, the environment is modified using the 3D printing-compatible supplementary printer geometry, before the drawing list required by the printer is output either directly to a printer or to a file for subsequent use by the printer driver.

Similarly, supplementary printer geometry for 2D elements of the environment may be defined that has the thickness needed to provide adequate structural support for the environmental feature when 3D printed.

It will be appreciated that where the 3D model can also be coloured during construction, either by the application of ink or by the selection of different coloured plastics, then the textures used for the video game geometry can also be used to drive the colouring process for the model.

It will also be appreciated that the textures can also be used for the supplementary printer geometry to the extent that the in-game and supplementary geometries match. However, for elements of the supplementary printer geometry not found in the rendered game (such as the connecting rods in the 'Blobman' example above), either supplementary textures may be provided, or textures may be extrapolated from the existing textures, or no texture may be used. In the case that textures are extrapolated, optionally the texture may be extrapolated from the portion of the environment supporting an element against gravity (e.g. the ground, or in the case of Blobman, from the feet to the torso, and from the torso to the hands and head, respectively), as this is likely to create the most unobtrusive supporting structure within the model. Alternatively in the case of using no texture, the bare plastic (or other 3D printer material) is left exposed, making it clear to the viewer that this is a functional support that is not part of the original image. Which approach is preferred may be an artistic decision for the user or developer.

To limit the burden on developers, this supplementary printer geometry may be provided only in key areas of the game, for example where a particular puzzle is solved or a boss has been defeated. The option to create a 3D snapshot will thus only be enabled within the supported areas. Optionally in such areas additional 'bonus' geometry may be provided, such as exclusive victory poses that the user can select for their character to use within the 3D printed version of the environment.

However it will be appreciated that the supplementary printer geometry places a development burden on developers, and imposes a trade-off between the flexibility to print mementos of the in game experience and the amount of additional geometry that needs to be defined to support this ability. It will be preferable to increase the number of environments where this is possible whilst mitigating the burden on the developer.

### Procedural Geometry

Accordingly, in an embodiment of the present invention the provision of predefined supplementary printer geometry may be assisted or replaced by the generation of procedural printer geometry for the purposes of 3D printing. This procedural printer geometry provides the same function as the developer-designed supplementary printer geometry in that it provides structural strength and physical links for some elements of the virtual environment that it would not otherwise be feasible to replicate in a 3D printed model.

Procedural printer geometry may be created for the virtual environment during the development stage of the game, so that the procedural printer geometry is available in advance of the user selecting to print a 3D model of a particular scene. In these circumstances, any supplementary printer geometry and any procedural printer geometry already created may be included with the game either on a physical medium or as part of a download, or may be downloaded separately either in response to a user's request to print out a 3D model, or in response to the detection of a 3D printer operably coupled to the particular entertainment device. Providing the printer geometry separately has the advantage of reducing the amount of data needed on a recording medium or needed to be downloaded by those users who do not intend to print a 3D model from the game.

Alternatively or in addition, procedural printer geometry may be generated by the entertainment device once the user has indicated a wish to generate a 3D model of the current scene.

Whether the procedural printer geometry is generated during development or at the point of demand, the approach is similar:
The existing in-game geometry of the environment is analysed to detect whether additional geometry is required, according to several basic rules. In the case of procedural printer geometry generated by the entertainment device, the analysis of the environment may be limited to a region responsive to the current in-game viewpoint.

One analysis step is to detect whether there are unsupported objects within the environment.

If so, then these may be made subject to a *de minimis* size threshold so that objects below the threshold, such as for example snowflakes, bullets etc., are ignored and subsequently not incorporated within the 3D model.

Meanwhile for objects that meet the threshold, the geometry for a connecting rod is procedurally generated between the object and the nearest anchor point, the anchor point being a part of the environment ultimately connected to the ground, where the ground is the lowest part of the environment that will be incorporated within the model. Optionally the analysis can proceed from the lowest part of the analysed environment upwards so that unsupported objects can be sequentially supported, enabling them to support subsequent objects in sequence.

Consequently where a video game character is leaping into the air for example, a supporting rod will be placed between the base of their foot and the ground.

The thickness of the rod may also be procedurally determined according to basic rules. For a given type of printer, the weight by volume of common 3D printer materials and their compression and bending strengths will be known. In addition, the expected size of the printed model will be known. Accordingly, the entertainment device can estimate the weight of unsupported objects, and calculate the thickness of supporting rod needed to adequately support the object within the model. In particular where a connecting rod is partly or wholly lateral and hence may bend, the moment of the unsupported object is a function of its weight multiplied by its distance from the current position along the rod. Furthermore when constructing a connecting rod for such an object, the weight of the connecting rod itself may be a significant proportion of the weight. Consequently the rod may be thicker closer to the anchor point and taper towards the unsupported object as respective parts of the rod support a greater weight at the anchor point than at the unsupported object.

In another analysis step, the above principle can be applied to other components of the in-game environment; for example a virtual model within a game may have legs that are too thin to support the total mass of the desk surface and any objects on the desk; accordingly features of the in-game environment can be evaluated to determine the total weight they will be supporting in the model, and where this exceeds a safe margin for the existing in-game geometry, this geometry may be thickened by scaling up its cross-section. The principle may also for example be applied to trees within the environment, where the cumulative weight of branches and the trunk are used to locally modify the geometry of the branches or trunk to make their cross-section larger to accommodate the weight, in those circumstances where the existing in-game geometry is locally insufficient to accommodate the weight when rendered as a 3D model using the particular materials associated with the 3D printer.

In another analysis step, two-dimensional components of the environment are identified and procedural printer geometry is created by extruding the geometry, for example outward from the centre of the environment (more generally, normal to the plane of the component, preferably extruding from a side on which a texture is not applied) to create a three-dimensional object with at least a minimum thickness.

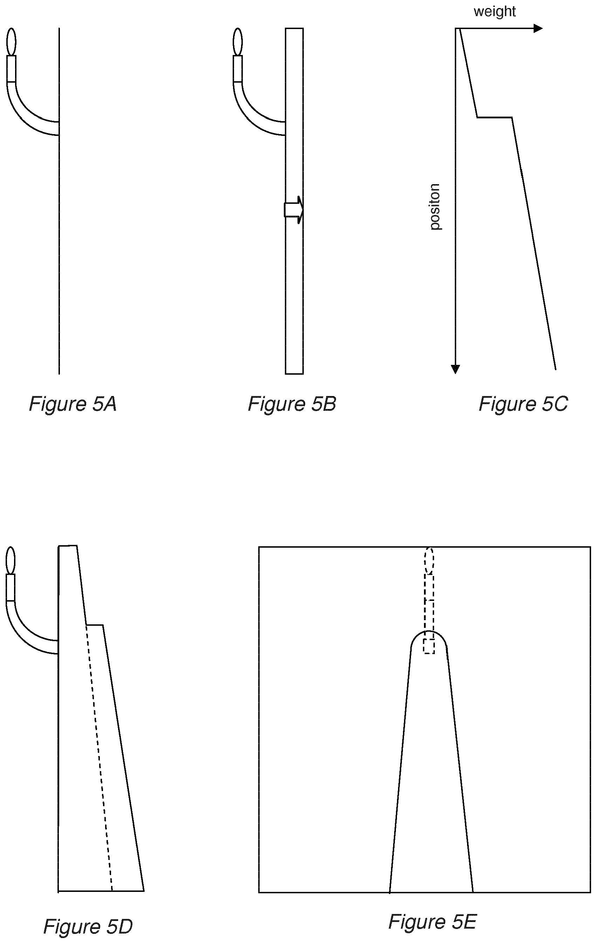

Referring now to Figures 5A-E, it will be seen that Figure 5A represents a two-dimensional wall from the environment 200, upon which a candle and candlestick are placed within the game. Figure 5B then illustrates an extrusion process to extend the wall in a direction normal to the wall plane and opposite to the side to which the in-game texture is applied, to procedurally generate geometry describing a wall with a predetermined thickness. However as can be seen in Figure 5C, the cumulative weight of the wall changes according to the position on the wall, and also encounters a step change for parts of the wall additionally supporting the candle and candlestick. Accordingly, a wall of constant thickness may be unsuitable as the thickness of the wall near the base may be insufficient to adequately support the cumulative weight of the model.

Accordingly, with reference to Figures 5D-E, then starting with a minimum preferred thickness of extrusion at the top of the wall, the thickness of the extrusion increases as a function of cumulative weight, resulting in a step change in thickness at the point of attachment of the candlestick to the wall to provide additional support. It will be appreciated that procedural rules may thicken a region around such points of attachment, such that the wall is thickened slightly before the load of the candlestick is applied to the wall, as illustrated in Figures 5D-E. In addition, the procedural rules may accommodate the additional mass of the supportive thickening itself when extruding lower portions of the wall. Finally, the load imposed by the candlestick and the supporting region may be distributed laterally as well as vertically, so that the thickened supporting region splays sideways as it propagates down the wall, as shown in Figure 5E.

It will be appreciated that a 2D structure simply has no thickness, but need not be bound to a 2D plane; for example a cape or curtain may have no thickness, but may undulate and curve within the 3D environment.

It will be appreciated that a combination of predefined supplementary printer geometry and procedural printer geometry may be used. For example, where artistic considerations are paramount then individually designed supplementary printer geometry may be most appropriate; similarly for unique environment structures, specific procedural rules may be provided that differ from general rules. Where a developer uses procedural rules to generate procedural printer geometry, they may also further edit the generated geometry as desired before publishing it for access by users.

In addition, the procedural rules may interact with additional information provided by the game developer, to assist in generating desirable supplementary geometry automatically.

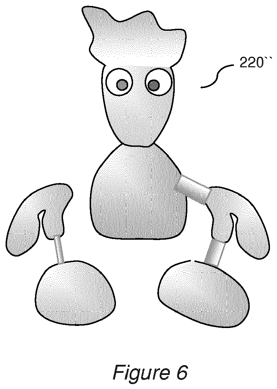

For example, the previously noted rule that a connecting rod is procedurally generated between an unsupported object and the nearest anchor point, where the anchor point is a part of the environment ultimately connected to the ground, may result in 3D model of Blobman 220" as illustrated in Figure 6. It will be appreciated that when the character's hands are analysed, it is likely that they are closer to the characters feet than to the character's torso, and possibly also that the characters torso will not yet be connected to an anchor structure itself. Accordingly the procedural rules may attach the character's hand to the only grounded anchor points available, which are the feet; subsequently the torso may be anchored to the closest single anchor point, which is now one of the hands. The result is a structure that, whilst stable, does not conform anatomically to what the user might expect.

Accordingly, game developers may identify preferred points of connection between elements of the environment in order to guide the procedural generation of connecting rods or other connecting/support structures. These points of connection may be defined as meta-data associated with the virtual objects, for example specifying which polygon in one model should be linked to which polygon in another model via such a connecting/support structure. Alternatively or in addition, such points of connection may be defined by use of a reserved value within one or more colour channels, enabling points of connection to be identified by use of a specifically coloured identifying pixel within the texture applied to a model; for example if the value 128 was reserved on the blue channel to denote a connecting point, then this can be used in the example of the Blobman character of Figure 6 to specify where preferred connecting points exist on the model. Then, for example, matching values in the other two colour channels of the identifying pixel can be used to indicate paired connecting points, so that red and green values in the identifying pixel could be the same for the hand and the torso, causing these to be identified as sections to be connected together. In this way, artistic control of the placement of connecting structures can be maintained by the developers without the need for separate meta-data. In the case of Blobman, this could be used to ensure an anatomically acceptable set of connecting rods, as seen previously in Figure 4. Meanwhile, the rules for procedural generation of the connecting/support structure will still determine the required cross-section needed to adequately support the printed structure.

The above analysis related to the positioning of support structures in a procedural generation of supplementary printer geometry. However, alternative or additional analysis may be considered. In particular, modern videogames use advanced techniques to create the illusion of a more complex surface structure than that created by the underlying polygonal model itself. For example, bump mapping uses texture information to generate variabilities in the surface to which the texture is applied. As a crude example highlights and shadows in the texture can be equated with peaks and troughs, which are then used to vary the physical dimensions of the surface within the virtual model to create such peaks and troughs.

Consequently, when generating geometry for the 3D printer, surface variations generated by bump mapping and similar techniques can be taken into account (for example, replicated) when generating a voxel model of the structure to be printed.

It will be appreciated that such surface variability and potentially other features of the environment may occasionally have a high spatial frequency relative to the voxel resolution of the 3D printer. Accordingly the resulting model may be filtered to remove such high-frequency detail to avoid aliasing effects in the resulting model, where the filter is responsive to the spatial frequency of the voxel is generated by the particular 3D printer in use.

It will be appreciated that the procedural generation of supplementary printer geometry may be of particular use for games where the user is allowed to heavily customise either their own avatar or the environment, for example in the case of so-called 'mods'. In these circumstances developer-provided supplementary geometry may not be available, or may only be available for a subset of objects that are used by the user in the creation of their own mod.

In the same way that connection identification points for procedurally generated connective structures may be provided by the developers as described above, another intermediate approach between provided supplementary geometry and procedural supplementary geometry may be applied to a mesh repair process. Meshes (interlinking polygons forming a surface structure) can have unintended gaps, self-intersections and overlapping faces, particularly for example where character models are animated using physics-based rules and are not constrained to predetermined animation sequences. In these cases, a mesh repair process can repair the original mesh using repair hint metadata. Hint data replaces default repair heuristic values with developer-specified ones. This mesh repair process could thus be re-purposed to 'repair' a mesh using repair hint metadata designed to implement some or all of the provided or procedural supplementary geometry described above. For example, it could be used to thicken walls, or 'repair' meshes by creating connective structures as described above. The extent to which the mesh repair process can be used in this way will vary depending on the process available to the game or platform.

### Geometry Integrity

The above discussion has assumed that the in game geometry is sufficiently complete to enable either the use of complimentary prepared printer geometry, or to enable the generation of procedural printer geometry.

However, in practice it is possible that some elements of the in-game geometry are culled during the rendering process to reduce processor load, for example by reducing the number of polygons to which textures need to be applied to only those that are directly visible from a current viewpoint visible via the TV display. However it will be appreciated that a 3D model may be viewed from all angles and consequently the in game geometry may be inadequate.

Accordingly, in these circumstances, when a user indicates their wish to capture a scene for 3D printing, optionally the game state is frozen so that the currently displayed scene can be re-rendered, at this time without the culling of polygons or textures, in order to create a complete geometrical description of the displayed environment. In the circumstances the frame rate for this particular render is not as important as generating the complete model. It will also be appreciated that such a render may omit environmental elements that cannot easily be replicated by a 3D printer such as volumetric fog and airborne particles below a threshold size. In addition other elements of the environment that may not replicate well in 3D printing may be modified; for example windows and other transparent or translucent objects within the virtual environment may be replaced by empty apertures for example where the transparency or translucency of the object is above a threshold level, and transparent raw materials are not available to the printer.

### Object Selection

The above discussion has assumed that a region of the virtual environment displayed to the user will be replicated as a 3D model. However, optionally the user may specify one or more objects in the environment for 3D printing alone; for example, the user may select to just print their avatar, or their avatar and an opponent. This may be of particular value for cases where the user is allowed to customise their own in-game character, and becomes emotionally attached to it.

This selection may be done for example by a user interface for defining a bounding box around the desired object(s), or by a user interface for indicating specific objects within the game environment using a cursor or reticule.

Where the object(s) are selected in this manner in isolation from a supporting surface, a default surface such as a flat panel may be generated having an area responsive to the size of the selected object(s). The selected object(s) can then be coupled to the support surface using the techniques described herein.

Conversely, where a region of the environment is included within the model, optionally the user may override any automatic selection of scale to ensure that a particular environmental feature or combination of features is included in the final model. This may be of particular value for cases where the user is allowed to customise the environment, for example by creating so-called 'mods'.

### Editing

Once the printer geometry and optionally the textures for the 3D model have been obtained using the above techniques as applicable, then optionally they may be transferred to an editing application for the user to preview or modify the model before sending it to the printer. Optionally modification may be limited to certain elements of the environment that are tagged as editable; hence for example support structures and modifications to the cross-section of objects for structural purposes may not be editable, but pose and positioning of certain key characters may be editable, as may the addition of decals, either purely to painted textures, or to the surface structure of objects for example by use of the bump mapping technique described above so that the user can effectively engrave messages into a surface of the model.

It will be appreciated that supplementary geometry, particularly where provided by the developers, may be selected for its aesthetic properties as well as or instead any particular functional properties. Similarly, the user may edit aspects of the model for purely aesthetic reasons.

### Final Print

Once the user is satisfied with their 3D model, it may be sent to the printer. As described previously, a printer driver analyses the model and divides it into layers of voxels for successive printing.

Where the printer is a domestic device either physically attached to the console or sharing a home network, then the printer driver may be implemented on the entertainment device, and the resulting drawing lists sent to the printer by the entertainment device.

However optionally a printing service may be provided by the entertainment device's network (that is to say, a network provided for example by the manufacturers of the entertainment device). This may allow access to a more expensive and sophisticated 3D printer than the average consumer could afford, and consequently a better quality model. In these circumstances either the printer driver may still be on the console, to distribute processing load among users, or may be at a central server connected to the 3D printer. In the first instance local printer drivers will generate drawing lists that may be sent securely to a central print queue server, together with meta data relating to the postal address of the user. In the second instance the entertainment device securely sends the 3D model printer geometry and texture information to a central printer driver that performs the relevant analysis to generate the required drawing lists before queueing them for printing. In either of these cases, printing of the model may be contingent upon the payment of a fee, for example via a payment card registered with the entertainment device's network, or similarly may be contingent upon the receipt of a voucher which might be earned for example as a trophy or other in game award or as part of the purchase price of a game, entitling the user to the creation of a predetermined number of 3D models from that game.

### Waste Materials

It will be appreciated that 3D Printing techniques such as selective laser sintering can trap large quantities of the raw printer material inside the resulting model. This is because such techniques apply successive layers of powder across the top of the model during printing, fusing only a small proportion corresponding to the model's periphery but leaving the remaining powder inside that periphery untouched. The overall result is a volume of powder within which is a fused shell, with the powder outside that shell being removable, whilst the powder inside the shell is trapped.

This creates unnecessary costs in terms of wasted raw materials. It can also affect the balance of the resulting objects. Consequently it is commonplace to include vents or openings in models designed for 3D Printing to allow the waste powder to be poured or washed out.

However, such vents or openings are not present in videogame characters and are not desirable.

Accordingly, in an embodiment of the present invention, supplementary printer geometry is provided by the developer to specify where on videogame characters and other selected environmental features the model may be modified to allow printer powder to be poured or washed out. The geometry may take the form of a line around the object denoting that the object be separated into halves at this point (for example by not sintering a layer of powder, and offsetting the remaining part of the object by one voxel). The line need not be horizontal providing it is contiguous, and so may be chosen to reduce the visibility of the subsequent adhesion process. Hence for example the line may trace a change in colour in the object texture (for example, around the waist of a character between clothing items), or may trace a discontinuity on the surface of the model, such as a belt. Alternatively or in addition, the supplementary printer geometry may comprise a hole in the model, typically selected by the developer to be in an unobtrusive position (for example between character's back and a cape worn by the character; the cape hide the hole whilst still allowing powder to be poured or washed out).

These supplementary printer geometries may be only used as an additional preparatory stage when a powder-based printer is connected or specified as the target device.

Where procedural rules are also used, then in a similar manner in an embodiment of the present invention a procedural rule is implemented to calculate the effective volume of space within objects in the printed scene. Where that volume exceeds a threshold amount, the object is treated as a hollow body and a procedural rule creates an opening in the voxel shell of the hollow body of a size that allows printer powder to flow out. Preferably, the opening is located on the underside of the hollow body and/or on a side facing away from the original viewpoint displayed on screen to the user when they indicated that they wanted to print the scene. The opening may be a hole in the voxel shell, or preferably an annular gap forming a ring or some other shape of closed loop. In the case of an annular gap, this results in a loose cover in the printed body that can be removed to allow the powder out, but which can then by adhered back onto the model, minimising the aesthetic impact of removing the powder on the finished object.

It will be appreciated that a 3D printed scene may comprise multiple such hollow bodies. For example, the scene may comprise the ground, a character such as Blobman, and a tree. The ground is typically an open shell. Meanwhile the tree rests upon it, with the ground forming the base of the tree. Following calculations of the volume within the model, the tree trunk may be identified as a hollow object. Accordingly, a hole may be created in the ground beneath the tree, visible only if the model is viewed from the underside. By contrast, the torso of the Blobman character is supported by connecting rods above the ground. Consequently if the torso is identified as a hollow object, an annular gap is included facing away from the original viewpoint, optionally at a position a threshold distance from any connecting rod. This allows the torso to be drained of powder but also to be repaired by affixing back in place the removable component of the torso created by the annular gap.

Optionally, the procedural rule may use features of the object itself to reduce the aesthetic impact of the hole or annular gap, for example by setting some or all of one or more edges of the hole or gap to follow adjacent a boundary between texture colours in a model, and/or to follow adjacent a ridge or other discontinuity in the model surface.

The system may use the 3D model data to estimate the volume of printer raw material needed, and provide a quote estimating the cost of printing the model before the user commits to doing so.

### Summary embodiments

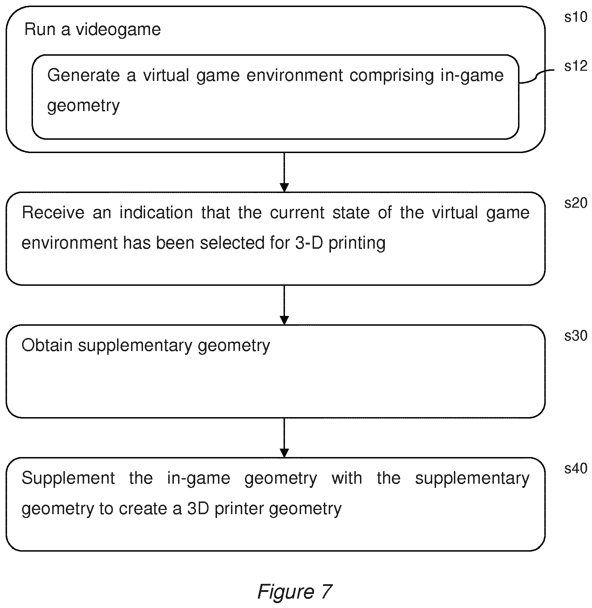

Referring now to Figure 7, in a summary embodiment of the present invention, a method of 3D printing comprises:
in a first step s10, running a videogame, in turn comprising a sub-step s12 of generating a virtual game environment comprising in-game geometry;
in a second step s20, receiving an indication that the current state of the virtual game environment has been selected for 3D printing;
in a third step s30, obtaining supplementary geometry; and
in a fourth step s40, supplementing the in-game geometry with the supplementary geometry to create a 3D printer geometry;
in which components of the virtual game environment included in the 3D printer geometry are modified by the supplementary geometry to have structural features within the 3D printer geometry that have dimensions calculated to support the model in its final printed physical form.

It will be appreciated that the generated virtual game environment may be limited to a predetermined draw distance and to a field of view dependent upon user selection and/or a virtual camera.

It will be appreciated that the supplementary geometry and the created 3D printer geometry may be limited to a sub-region of the generated virtual game environment, based upon user selection or a preferred scale for a particular in-game object within the virtual game environment (such as the player's character) within the final printed object. This in turn determines the scale of the virtual game environment within the printed model and hence the extent of the virtual environment that can be accommodated by the particular 3D printer being used.

It will also be appreciated that where this restriction to a sub-region effectively creates orphan unsupported environmental components (for example where the sub-region doesn't extend as high as the roof of a room but does extend as high as a chandelier depending from the roof), then these orphan unsupported environmental components are treated as if they are natively unsupported environmental components such as characters jump in the air, flying dragons or the like. Consequently, supporting structures may be provided for them as described elsewhere herein.

In an instance of the summary embodiment, the step of obtaining supplementary geometry comprises accessing predefined supplementary geometry, as noted previously herein. This may be done by accessing predefined supplementary geometry installed with the game and stored locally with the game on the entertainment device hard disk, or by accessing predefined supplementary geometry packaged with the game and stored on an optical disc but not stored locally with the game on the entertainment device hard disk. Alternatively or in addition, some or all of the required supplementary geometry may be obtained by downloading predefined supplementary geometry specific to the current state of the virtual game environment. For example, predefined supplementary geometry relating to a particular game level and/or a particular virtual geographic region may be downloaded.

In an instance of the summary embodiment, the step of obtaining supplementary geometry comprises procedurally generating supplementary geometry, as noted previously herein, according to one or more generative rules responsive to the current state of the virtual game environment.

In this instance, the step of procedurally generating supplementary geometry may comprise associating supplementary geometry indicator data with the in-game geometry that is indicative of where to place supplementary support structures within the 3D printed model, such as for example connecting rods. In this case, the supplementary geometry indicator data may be associated with the in-game geometry meta-data associated with one or more polygons of a virtual object, and/or embedding indicator data within texture data, as noted previously herein.

Also in this instance, the step of procedurally generating supplementary geometry may comprise calculating the cross-sectional area of support structures required to support the weight of the 3D printer model supported by the support structures, and setting or modifying the cross-sectional area of said support structures accordingly, as noted previously herein. For example, the cross sectional area of connecting rods may be calculated according to the apparent weight of the load they bear at each point along the rod. Similarly, existing in-game structures may have their cross-sectional areas increased if their existing cross sectional area is insufficient to support the apparent weight placed upon them in the final model. In the specific case of 2D structures within the environment which have a zero cross-sectional area, then the cross-sectional area may be increased by extruding the 2D structure as described previously herein.

Meanwhile, in an instance of the summary embodiment, the step of creating a printer geometry comprises implementing a depth modification of a surface in the 3D printer geometry responsive to features of a texture applied to that surface.

In an instance of the summary embodiment, the step of creating a printer geometry comprises spatially filtering the 3D printer geometry responsive to the resolution of the 3D printer to which the geometry will be sent.

In an instance of the summary embodiment, the method comprises the step of associating textures with supplementary geometry, wherein the textures are obtained by obtaining predefined supplementary textures, and/or propagating texture information from existing in-game textures associated with respective supplemented in-game geometry.

In an instance of the summary embodiment, the method comprises the step of, upon receiving an indication that the current state of the virtual game environment has been selected for 3D printing, re-rendering the virtual game environment without deleting components of the environment responsive to the viewpoint at which the environment is to be displayed to a user.

In an instance of the summary embodiment, the method comprises the step of modifying the 3D printer geometry to include a discontinuity from which printer powder may be reclaimed. As described previously, the may be done using supplementary printer geometry and/or procedurally generated geometry.

Referring now back to Figure 1, in a summary embodiment of the present invention, an entertainment device comprises game processing means (such as APU 20) arranged in operation to run a videogame by generating a virtual game environment comprising in-game geometry, input means (such as Bluetooth ® port 33 operable to receive controller inputs) arranged in operation to receive an indication that the current state of the virtual game environment has been selected for 3D printing, obtaining means (such as HDD 37 or BD-ROM 36, or Ethernet ® 32, or APU 20) arranged in operation to obtain supplementary geometry, and geometry processing means (such as APU 20) arranged in operation to supplement the in-game geometry with the supplementary geometry to create a 3D printer geometry, and in which the geometry processing means is arranged in operation to modify components of the virtual game environment included in the 3D printer geometry by the supplementary geometry to have structural features within the 3D printer geometry that have dimensions calculated to support the model when in its final printed physical form.

In an instance of this summary embodiment, the obtaining means comprises generating processing means (such as APU 20) arranged in operation to procedurally generate supplementary geometry according to one or more generative rules responsive to the current state of the virtual game environment.

In an instance of this summary embodiment, the entertainment device comprises communication means (such as WiFi ® port 34 or Ethernet ® port 32) arranged in operation to send data representative of the 3D printer geometry to a remote server associated with a 3D printer for printing, in which the communication means is arranged in operation to securely send data indicative that a qualifying criterion for proceeding with printing has been met.

It will be appreciated that the entertainment device of the summary embodiment comprises means for implementing the above recited instances of the first summary embodiment relating to the method of 3D printing. Typically the means comprise the APU running under suitable software instruction to implement the method.

Hence more generally, it will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product, for example comprising processor implementable instructions stored on a tangible non-transitory machine-readable medium such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Such a computer program may comprise computer software which, when executed by a computer, causes the computer to implement one or more of the methods as discussed above. Separately, such a computer program may be transmitted via data signals on a network such as an Ethernet, a wireless network, the Internet, or any combination of these of other networks.

Finally, in a summary embodiment of the present invention, the entertainment device 10 and the 3D printer 100 together form a 3D printing system, where the 3D printer is arranged in operation to receive from the entertainment device printing instructions descriptive of a structure comprising in-game geometry supplemented by supplementary geometry.

## Claims

1. A method of 3D printing, comprising the steps of:
running (s10) a videogame, in turn comprising a step of generating (s12) a virtual game environment comprising in-game geometry (220);
receiving (s20) an indication that the current state of the virtual game environment has been selected for 3D printing;
obtaining (s30) supplementary geometry (222A,B,C,D); and
supplementing (s40) the in-game geometry with the supplementary geometry to create a 3D printer geometry (220');
in which components of the virtual game environment included in the 3D printer geometry are modified by the supplementary geometry to have structural features within the 3D printer geometry that have dimensions calculated to support the model in its final printed physical form; and **characterised in that**
the step of obtaining supplementary geometry comprises:
procedurally generating supplementary geometry (222A,B,C,D) according to one or more generative rules responsive to the current state of the virtual game environment; and
associating supplementary geometry indicator data with the in-game geometry that is indicative of where to place supplementary support structures within the 3D printed model; and wherein
the supplementary geometry indicator data is associated with the in-game geometry by one or more selected from the list consisting of:
i. meta-data associated with one or more polygons of a virtual object; and
ii. embedding indicator data within texture data.

2. A method of 3D printing according to claim 1, in which the step of obtaining supplementary geometry comprises:
accessing predefined supplementary geometry.

3. A method of 3D printing according to claim 2, in which the step of accessing predefined supplementary geometry comprises:
downloading predefined supplementary geometry specific to the current state of the virtual game environment.

4. A method of 3D printing according to claim 1, in which the step of procedurally generating supplementary geometry comprises:
calculating the cross-sectional area of support structures required to support the weight of the 3D printer model supported by the support structures; and
setting or modifying the cross-sectional area of said support structures accordingly.

5. A method of 3D printing according to any one of the preceding claims, in which the step of obtaining supplementary geometry comprises:
implementing a mesh repair process with repair hint metadata adapted to cause the mesh repair process to generate supplementary geometry mesh.

6. A method of 3D printing according to any one of the preceding claims, in which the step of creating a printer geometry comprises:
implementing a depth modification of a surface in the 3D printer geometry responsive to features of a texture applied to that surface; and.
spatially filtering the 3D printer geometry responsive to the resolution of the 3D printer to which the geometry will be sent.

7. A method of 3D printing according to any one of the preceding claims, comprising the step of:
associating textures with supplementary geometry,
wherein the textures are obtained by one or more selected from the list consisting of:
i. obtaining predefined supplementary textures; and
ii. propagating texture information from existing in-game textures associated with respective supplemented in-game geometry.

8. A method of 3D printing according to any one of the preceding claims, comprising the step of:
modifying the 3D printer geometry to include a discontinuity from which printer powder may be reclaimed.

9. A computer program product comprising computer software which, when executed by a computer, causes the computer to implement the steps of any preceding method claim.

10. An entertainment device (10), comprising:
game processing means (20) arranged in operation to run a videogame by generating a virtual game environment comprising in-game geometry (220);
input means (33) arranged in operation to receive an indication that the current state of the virtual game environment has been selected for 3D printing;
obtaining means (36, 37, 32, 20) arranged in operation to obtain supplementary geometry (222A,B,C,D); and
geometry processing means (20) arranged in operation to supplement the in-game geometry with the supplementary geometry to create a 3D printer geometry; and
in which
the geometry processing means is arranged in operation to modify components of the virtual game environment included in the 3D printer geometry by the supplementary geometry to have structural features within the 3D printer geometry that have dimensions calculated to support the model when in its final printed physical form; and **characterised in that**
the obtaining means is arranged in operation to:
procedurally generate supplementary geometry (222A,B,C,D) according to one or more generative rules responsive to the current state of the virtual game environment; and
associate supplementary geometry indicator data with the in-game geometry that is indicative of where to place supplementary support structures within the 3D printed model; and wherein
the supplementary geometry indicator data is associated with the in-game geometry by one or more selected from the list consisting of:
i. meta-data associated with one or more polygons of a virtual object; and
ii. embedding indicator data within texture data.

11. An entertainment device according to claim 10, comprising:
communication means (32, 34) arranged in operation to send data representative of the 3D printer geometry to a remote server associated with a 3D printer for printing;
in which the communication means is arranged in operation to securely send data indicative that a qualifying criterion for proceeding with printing has been met.

12. A 3D printing system, comprising:
an entertainment device according to claim 10; and
a 3D printer (100) arranged in operation to receive printing instructions descriptive of a structure comprising in-game geometry supplemented by supplementary geometry.

## Patentansprüche

1. Verfahren zum 3D-Drucken, aufweisend die Schritte:
Laufenlassen (s10) eines Videospiels, das wiederum einen Schritt zum Erzeugen (s12) einer virtuellen Spielumgebung aufweist, die eine spieleigene Geometrie (220) aufweist;
Empfangen (s20) einer Anzeige, dass der aktuelle Zustand der virtuellen Spielumgebung für einen 3D-Druck ausgewählt wurde;
Erhalten (s30) einer ergänzenden Geometrie (222A,B,C,D); und
Ergänzen (s40) der spieleigenen Geometrie mit der ergänzenden Geometrie, um eine 3D-Druckergeometrie (220') zu erstellen;
wobei Komponenten der virtuellen Spielumgebung, die in der 3D-Druckergeometrie enthalten sind, durch die ergänzende Geometrie modifiziert werden, um Strukturmerkmale innerhalb der 3D-Druckergeometrie zu haben, die Dimensionen haben, die berechnet wurden, um das Modell in seiner endgültigen gedruckten physischen Form zu stützen; und **dadurch gekennzeichnet, dass** der Schritt zum Erhalten einer ergänzenden Geometrie aufweist:
prozedurales Erzeugen einer ergänzenden Geometrie (222A,B,C,D) gemäß einer oder mehreren Erzeugungsregeln in Reaktion auf den aktuellen Zustand der virtuellen Spielumgebung; und
Verknüpfen von Indikatordaten der ergänzenden Geometrie mit der spieleigenen Geometrie, die anzeigt, wo die ergänzenden Stützstrukturen innerhalb des 3D-gedruckten Modells zu platzieren sind; und wobei
die Indikatordaten der ergänzenden Geometrie mit der spieleigenen Geometrie durch eines oder mehrere verknüpft sind, ausgewählt aus der Liste bestehend aus:
i. Metadaten, die mit einem oder mehreren Vielecken eines virtuellen Objekts verknüpft sind; und
ii. Einbetten von Indikatordaten in Texturdaten.

2. Verfahren zum 3D-Drucken nach Anspruch 1, in dem der Schritt zum Erhalten einer ergänzenden Geometrie aufweist:
Zugreifen auf eine vordefinierte ergänzende Geometrie.

3. Verfahren zum 3D-Drucken nach Anspruch 2, in dem der Schritt zum Zugreifen auf eine vordefinierte ergänzende Geometrie aufweist:
Herunterladen einer vordefinierten ergänzenden Geometrie, die für den aktuellen Zustand der virtuellen Spielumgebung spezifisch ist.

4. Verfahren zum 3D-Drucken nach Anspruch 1, in dem der Schritt zum prozeduralen Erzeugen einer ergänzenden Geometrie aufweist:
Berechnen der Querschnittsfläche von Stützstrukturen, die notwendig sind, um das Gewicht des SD-Druckermodells zu stützen, das durch die Stützstrukturen gestützt wird; und
Einstellen oder Modifizieren der Querschnittsfläche der Stützstrukturen dementsprechend.

5. Verfahren zum 3D-Drucken nach einem der vorangehenden Ansprüche, in dem der Schritt zum Erhalten einer ergänzenden Geometrie aufweist:
Implementieren eines Netzreparaturprozesses mit Reparaturhinweismetadaten, die ausgebildet sind, den Netzreparaturprozess zu veranlassen, um ein ergänzendes Geometrienetz zu erzeugen.

6. Verfahren zum 3D-Drucken nach einem der vorangehenden Ansprüche, in dem der Schritt zum Erstellen einer Druckergeometrie aufweist:
Implementieren einer Tiefenmodifizierung einer Oberfläche in der 3D-Druckergeometrie in Reaktion auf Merkmale einer Textur, die auf dieser Oberfläche aufgebracht werden; und
räumliches Filtern der 3D-Druckergeometrie in Reaktion auf die Auflösung des 3D-Druckers, an den die Geometrie gesendet wird.

7. Verfahren zum 3D-Drucken nach einem der vorangehenden Ansprüche, aufweisend den Schritt zum:
Verknüpfen von Texturen mit ergänzender Geometrie,
wobei die Texturen durch eines oder mehrere erhalten werden, ausgewählt aus der Liste bestehend aus:
i. Erhalten vordefinierter ergänzender Texturen; und
ii. Verbreiten von Texturinformationen von bestehenden spieleigenen Texturen, die mit entsprechender ergänzender spieleigener Geometrie verknüpft sind.

8. Verfahren zum 3D-Drucken nach einem der vorangehenden Ansprüche, aufweisend den Schritt zum:
Modifizieren der 3D-Druckergeometrie, sodass sie eine Diskontinuität enthält, aus der Druckerpulver zurückgewonnen werden kann.

9. Computerprogrammprodukt, aufweisend Computersoftware, die, wenn durch einen Computer ausgeführt, den Computer veranlasst, die Schritte nach einem vorangehenden Verfahrensanspruch zu implementieren.

10. Unterhaltungsvorrichtung (10), aufweisend:
Spielverarbeitungsmittel (20), die in Betrieb angeordnet sind, ein Videospiel durch Erzeugen einer virtuellen Spielumgebung, die eine spieleigene Geometrie (220) umfasst, laufen zu lassen;
Eingabemittel (33), die in Betrieb angeordnet sind, eine Anzeige zu empfangen, dass der aktuelle Zustand der virtuellen Spielumgebung für einen 3D-Druck ausgewählt wurde;
Erlangungsmittel (36, 37, 32, 20), die in Betrieb angeordnet sind, eine ergänzende Geometrie (222A,B,C,D) zu erhalten; und
Geometrieverarbeitungsmittel (20), die in Betrieb angeordnet sind, die spieleigene Geometrie mit der ergänzenden Geometrie zu ergänzen, um eine 3D-Druckergeometrie zu erstellen; und
in der das Geometrieverarbeitungsmittel in Betrieb angeordnet ist, Komponenten der virtuellen Spielumgebung, die in der 3D-Druckergeometrie enthalten sind, durch die ergänzende Geometrie zu modifizieren, um Strukturmerkmale innerhalb der 3D-Druckergeometrie zu haben, die Dimensionen haben, die berechnet wurden, um das Modell in seiner endgültigen gedruckten physischen Form zu stützen; und **dadurch gekennzeichnet, dass**
Das Erlangungsmittel in Betrieb angeordnet ist zum:
prozeduralen Erzeugen einer ergänzenden Geometrie (222A,B,C,D) gemäß einer oder mehreren Erzeugungsregeln in Reaktion auf den aktuellen Zustand der virtuellen Spielumgebung; und
Verknüpfen von Indikatordaten der ergänzenden Geometrie mit der spieleigenen Geometrie, die anzeigt, wo die ergänzenden Stützstrukturen innerhalb des 3D-gedruckten Modells zu platzieren sind; und wobei
die Indikatordaten der ergänzenden Geometrie mit der spieleigenen Geometrie durch eines oder mehrere verknüpft sind, ausgewählt aus der Liste bestehend aus:
i. Metadaten, die mit einem oder mehreren Vielecken eines virtuellen Objekts verknüpft sind; und
ii. Einbetten von Indikatordaten in Texturdaten.

11. Unterhaltungsvorrichtung nach Anspruch 10, aufweisend:
ein Kommunikationsmittel (32, 34), das in Betrieb angeordnet ist, Daten, die für die 3D-Druckergeometrie repräsentativ sind, an einen fernen Server zu senden, der mit einem 3D-Drucker zum Drucken verknüpft ist;
in der das Kommunikationsmittel in Betrieb angeordnet ist, Daten, die anzeigen, dass ein Qualifikationskriterium für ein Fortfahren mit dem Druck erfüllt ist, sicher zu senden.

12. 3D-Drucksystem, aufweisend:
eine Unterhaltungsvorrichtung nach Anspruch 10; und
einen 3D-Drucker (100), der in Betrieb angeordnet ist, Druckanweisungen zu empfangen, die eine Struktur beschreiben, die spieleigene Geometrie ergänzt durch ergänzende Geometrie umfasst.

## Revendications

1. Procédé d'impression en 3D, comprenant les étapes suivantes :
l'exécution (s10) d'un jeu vidéo, comprenant à son tour une étape de génération (s12) d'un environnement de jeu virtuel comprenant une géométrie en-jeu (220) ;
la réception (s20) d'une indication que l'état actuel de l'environnement de jeu virtuel a été sélectionné pour une impression en 3D ;
l'obtention (s30) d'une géométrie complémentaire (222A, B, C, D) ; et
le complément (s40) de la géométrie en-jeu par la géométrie complémentaire dans le but de créer une géométrie d'imprimante en 3D (220') ;
des composants de l'environnement de jeu virtuel inclus dans la géométrie d'imprimante en 3D étant modifiés par la géométrie complémentaire de façon à les doter de caractéristiques structurales au sein de la géométrie d'imprimante en 3D qui présentent des dimensions calculées de façon à supporter le modèle dans sa forme physique imprimée finale ; et **caractérisé en ce que**
l'étape d'obtention d'une géométrie complémentaire comprend :
la génération procédurale d'une géométrie complémentaire (222A, B, C, D) selon une ou plusieurs règles génératives en réponse à l'état actuel de l'environnement de jeu virtuel ; et
l'association de données d'indication de géométrie complémentaire à la géométrie en-jeu, lesquelles indiquent où placer des structures de support complémentaires au sein du modèle imprimé en 3D ; et
les données d'indication de géométrie complémentaire étant associées à la géométrie en-jeu par un ou plusieurs éléments sélectionnés dans la liste constituée par :
i. des métadonnées associées à un ou plusieurs polygones d'un objet virtuel ; et
ii. l'incorporation de données d'indication au sein de données de texture.

2. Procédé d'impression en 3D selon la revendication 1, dans lequel l'étape d'obtention d'une géométrie complémentaire comprend :
l'accès à une géométrie complémentaire prédéfinie.

3. Procédé d'impression en 3D selon la revendication 2, dans lequel l'étape d'accès à une géométrie complémentaire prédéfinie comprend :
le téléchargement d'une géométrie complémentaire prédéfinie propre à l'état actuel de l'environnement de jeu virtuel.

4. Procédé d'impression en 3D selon la revendication 1, dans lequel l'étape de génération procédurale d'une géométrie complémentaire comprend :
le calcul de la superficie de section transversale de structures de support nécessaires pour supporter le poids du modèle d'imprimante en 3D supporté par les structures de support ; et
en conséquence de quoi, la fixation ou la modification de la superficie de section transversale desdites structures de support.

5. Procédé d'impression en 3D selon l'une quelconque des revendications précédentes, dans lequel l'étape d'obtention d'une géométrie complémentaire comprend :
la mise en oeuvre d'un processus de réparation de maillage à l'aide de métadonnées d'indice de réparation adaptées à amener le processus de réparation de maillage à générer un maillage de géométrie complémentaire.

6. Procédé d'impression en 3D selon l'une quelconque des revendications précédentes, dans lequel l'étape de création d'une géométrie d'imprimante comprend :
la mise en oeuvre d'une modification de profondeur d'une surface de la géométrie d'imprimante 3D en réponse à des caractéristiques d'une texture appliquée à cette surface ; et
le filtrage spatial de la géométrie d'imprimante en 3D en réponse à la résolution de l'imprimante en 3D vers laquelle la géométrie va être envoyée.

7. Procédé d'impression en 3D selon l'une quelconque des revendications précédentes, comprenant l'étape suivante :
l'association de textures à une géométrie complémentaire,
les textures étant obtenues par un ou plusieurs éléments sélectionnés dans la liste constituée par :
i. l'obtention de textures complémentaires prédéfinies ; et
ii. la propagation d'informations de texture à partir de textures en-jeu existantes associées à une géométrie en-jeu complétée respective.

8. Procédé d'impression en 3D selon l'une quelconque des revendications précédentes, comprenant l'étape suivante :
la modification de la géométrie d'imprimante en 3D de façon à y inclure une discontinuité à partir de laquelle de la poudre d'imprimante est susceptible d'être récupérée.

9. Produit-programme d'ordinateur comprenant un logiciel d'ordinateur dont l'exécution par un ordinateur amène l'ordinateur à mettre en oeuvre les étapes de l'une quelconque des revendications de procédé précédentes.

10. Dispositif de divertissement (10), comprenant :
un moyen de traitement de jeu (20) conçu, en fonctionnement, pour exécuter un jeu vidéo en générant un environnement de jeu virtuel comprenant une géométrie en-jeu (220) ;
un moyen d'entrée (33) conçu, en fonctionnement, pour recevoir une indication que l'état actuel de l'environnement de jeu virtuel a été sélectionné pour une impression en 3D ;
des moyens d'obtention (36, 37, 32, 20) conçus, en fonctionnement, pour obtenir une géométrie complémentaire (222A, B, C, D) ; et
un moyen de traitement de géométrie (20) conçu, en fonctionnement, pour compléter la géométrie en-jeu par la géométrie complémentaire dans le but de créer une géométrie d'imprimante en 3D ; et
le moyen de traitement de géométrie étant conçu, en fonctionnement, pour modifier des composants de l'environnement de jeu virtuel inclus dans la géométrie d'imprimante en 3D par la géométrie complémentaire de façon à les doter de caractéristiques structurales au sein de la géométrie d'imprimante en 3D qui présentent des dimensions calculées de façon à supporter le modèle dans sa forme physique imprimée finale ; et **caractérisé en ce que**
les moyens d'obtention sont conçus, en fonctionnement, pour :
générer de manière procédurale une géométrie complémentaire (222A, B, C, D) selon une ou plusieurs règles génératives en réponse à l'état actuel de l'environnement de jeu virtuel ; et
associer des données d'indication de géométrie complémentaire à la géométrie en-jeu, lesquelles indiquent où placer des structures de support complémentaires au sein du modèle imprimé en 3D ; et
les données d'indication de géométrie complémentaire étant associées à la géométrie en-jeu par un ou plusieurs éléments sélectionnés dans la liste constituée par :
i. des métadonnées associées à un ou plusieurs polygones d'un objet virtuel ; et
ii. l'incorporation de données d'indication au sein de données de texture.

11. Dispositif de divertissement selon la revendication 10, comprenant :
des moyens de communication (32, 34) conçus, en fonctionnement, pour envoyer des données représentant la géométrie d'imprimante en 3D à un serveur distant associé à une imprimante en 3D en vue d'une impression ;
les moyens de communication étant conçus, en fonctionnement, pour envoyer de manière sécurisée des données indiquant qu'un critère d'admissibilité pour procéder à l'impression a été rempli.

12. Système d'impression en 3D, comprenant :
un dispositif de divertissement selon la revendication 10 ; et
une imprimante en 3D (100) conçue, en fonctionnement, pour recevoir des instructions d'impression décrivant une structure comprenant une géométrie en-jeu complétée par une géométrie complémentaire.
